# EUROPEAN PATENT APPLICATION

(11) **EP 4 744 810 A1**
(43) Date of publication of application: **20.05.2026**
(21) Application number: 24843101.7
(22) Date of filing: 12.07.2024
(51) Int. Cl.: B23K 20/08, B23K 20/16, B32B 15/01

(54) **METAL COMPOSITE MATERIAL**

(30) Priority: 14.07.2023 JP 2023115936; 14.07.2023 JP 2023115990
(71) Applicant: ASAHI KASEI KABUSHIKI KAISHA, Tokyo 100-0006 (JP)
(72) Inventor: SAITO, Takumi, Tokyo 100-0006 (JP); TOMINAGA, Koji, Tokyo 100-0006 (JP); WADA, Naoyuki, Tokyo 100-0006 (JP)
(74) Representative: D Young & Co LLP
(86) International application number: PCT/JP2024/025332
(87) International publication number: WO 2025/018311

(57) **Abstract**

The present disclosure is a metal composite material having two or more layers composed of a first metal and a second metal, the metal composite material having, on the bonding surface of either or both of the first metal and the second metal, a surface-treatment film formed of a metal different from the first metal and the second metal. The first metal and the second metal are bonded via the surface-treatment film. The mechanical strength of the bonding interface between the first metal and the second metal is higher than the mechanical strength of either the first metal or the second metal.

## Description

### FIELD

The present invention relates to a metal composite material in which a first metal and a second metal are bonded together.

### BACKGROUND

Metal composite materials of dissimilar metals, such as aluminum and stainless steel, differ significantly in their physical properties, and are widely utilized for weight saving of structural bodies, for use in joints, or the like.

In general, it is difficult, in the case of metal composite materials composed of dissimilar metals significantly different in their physical properties, to directly bond such metals by metallurgical methods such as rolling, friction welding, diffusion bonding, and explosion welding. Therefore, metal composite materials are typically produced by placing an intermediate material between the joint surfaces of either or both metals, or by applying surface treatment to the joint surfaces prior to bonding.

For example, in PTL 1 below, a steel sheet is subjected to hot-dip aluminum plating, and heated to 450°C, and thereafter, an aluminum sheet is overlapped on top of it, and thus these are bonded together by rolling. However, a thermal load due to heating occurs in the course of bonding, and thus there is a concern about deterioration or alteration of the properties of the base material.

In addition, as described in PTL 2 below, a metal composite material is obtained by adopting, as a substrate, forming an aluminum base on a surface of the substrate, and roll bonding, thermal spraying, vapor-depositing, or hot-dip impregnation plating a thin aluminum layer on an upper portion of the base. On the other hand, the base formed on the surface of the substrate, although coated by any of roll bonding, thermal spraying, or vapor- depositing, is generally not high in joinability with the substrate, and therefore there is concern that the bond strength of the resulting bonded body may be lower in strength than the material itself.

In addition, as described in PTL 3 below, a clad material of an aluminum alloy and stainless steel is produced by explosion welding with an intermediate material such as pure aluminum, nickel, a nickel alloy, titanium, a titanium alloy, copper, a copper alloy, and silver being interposed. However, PTL 3 does not describe a method for bonding the aluminum alloy and the stainless steel without interposing an intermediate material.

Furthermore, in PTL 4, a pure aluminum layer is inserted between an aluminum alloy and silver in a clad material of the aluminum alloy, the silver, and stainless steel. PTL 4 mentions an explosion-welded product in which a silver or silver alloy layer is inserted between pure aluminum and stainless steel in order to increase the bond strength. However, in order to interpose the silver or silver alloy layer by explosion welding, it is necessary to prepare silver or a silver alloy having a certain thickness, which entails an increase in the number of times explosion welding must be carried out, and thereby resulting in higher cost.

### [CITATION LIST]

### [PATENT LITERATURE]

[PTL 1] Japanese Patent No. 1100170
[PTL 2] Japanese Unexamined Patent Publication (Kokai) No. H10-058591
[PTL 3] Japanese Patent No. 6346888
[PTL 4] Japanese Patent No. 3431358

### SUMMARY

### [TECHNICAL PROBLEM]

In view of the above-described level of conventional technology, a problem to be solved by the present invention is to provide a metal composite material of two or more layers, in which no intermediate material is utilized and a first metal and a second metal are bonded with a surface-treatment coating being interposed, and, more particularly, to provide a metal composite material that can avoid a thermal load, is excellent in terms of the strength of a joint interface and low in cost.

### [SOLUTION TO PROBLEM]

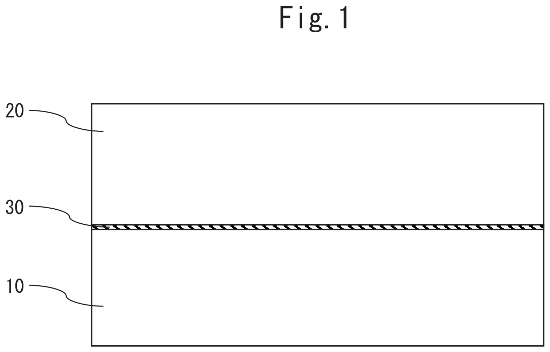

The inventors of the present application have carried out intensive studies and repeated experiments in order to solve the above problems, and as a result, have newly found a metal composite material in which a first metal and a second metal are strongly bonded with a surface-treatment coating, as schematically illustrated in FIG. 1.
[1] A metal composite material of two or more layers constituted by a first metal and a second metal, wherein the metal composite material comprises a surface-treatment coating formed with the first metal and a metal different from the second metal, on each of joint surfaces of either one or both of the first metal or the second metal, the first metal and the second metal are bonded with the surface-treatment coating being interposed, and the mechanical strength of a joint interface between the first metal and the second metal is higher than that of either one of the first metal or the second metal.
[2] The metal composite material according to aspect [1], wherein the surface-treatment coating is a plating coating.
[3] The metal composite material according to aspect [2], wherein a coefficient of linear expansion of the plating coating is 8.0 × 10⁻⁶/K or more.
[4] The metal composite material according to aspect [2] or [3], wherein a percentage of elongation of the plating coating is 5% or more.
[5] The metal composite material according to any one of aspects [1] to [4], comprising a thin coating formed by strike plating or zincate treatment, as a base of the surface-treatment coating.
[6] The metal composite material according to any one of aspects [1] to [5], wherein the surface-treatment coating is constituted with at least one metal selected from the group consisting of silver, nickel, copper, zinc, platinum, gold, and tin, or an alloy thereof.
[7] The metal composite material according to any one of aspects [1] to [6], wherein a thickness of the surface-treatment coating is 0.5 µm or more and less than 1000 µm.
[8] The metal composite material according to any one of aspects [1] to [7], wherein the second metal is at least one selected from the group consisting of an aluminum alloy, pure aluminum, a titanium alloy, and titanium, and the first metal is stainless steel or steel.
[9] The metal composite material according to any one of aspects [1] to [8], wherein the metal composite material has a structure of three or more layers, one outermost end is an aluminum alloy and other outermost end is stainless steel or steel, and the aluminum alloy is bonded to pure aluminum and the pure aluminum and the stainless steel or steel are bonded with the surface-treatment coating being interposed.
[10] The metal composite material according to any one of aspects [1] to [9], wherein the joint interface has a wave-like shape, and the wave height is 1 mm or less.
[11] A different-material joint constituted with the metal composite material according to any one of aspects [1] to [10].
[12] The different-material joint according to aspect [11], wherein each of indication patterns in joint interfaces each of the metals, as detected by a JIS Z 2343-1-II Cd-2 penetrant testing, is an indication pattern of 1 mm or less.
[13] The different-material joint according to aspect [11] or [12], wherein the different-material joint has a pipe arrangement shape having a predetermined perimeter, and a total value of lengths of the indication patterns in the respective joint interfaces, as detected by the penetrant testing, is 3% or less of the perimeter.
[14] The different-material joint according to any one of aspects [11] to [13], wherein an impact absorption energy in the Charpy impact test according to JIS Z 2242 at each of the joint interfaces is 15 J or more.
[15] A pipe arrangement component comprising a metal joint portion constituted with the metal composite material according to any one of aspects [1] to [10].
[16] A cryogenic container comprising a metal joint portion constituted with the metal composite material according to any one of aspects [1] to [10].
[17] A pressure container comprising a metal joint portion constituted with the metal composite material according to any one of aspects [1] to [10].
[18] A transport machinery component comprising a metal joint portion constituted with the metal composite material according to any one of aspects [1] to [10].
[19] A method for producing a metal composite material, the method comprising a step of subjecting each of joint surfaces of either one or both of a first metal or a second metal, to surface treatment processing, to form a surface-treatment coating constituted with the first metal and a metal different from the second metal, and a step of bonding the first metal and the second metal with the surface-treatment coating being interposed, by an explosion welding method.
[20] The production method according to aspect [19], wherein the surface-treatment coating is a plating coating.

One aspect belonging to the technical field of the present invention is as follows.
[1A] A metal composite material of two or more layers constituted with a first metallic sheet and a second metallic sheet, wherein the metal composite material comprises a surface-treatment coating in which each of joint surfaces of either one or both of the first metal or the second metal is coated with a thin coating of the first metal and a metal different from the second metal, the first metal and the second metal are directly bonded with the surface-treatment coating being interposed, and mechanical strength of a joint interface between the first metal and the second metal is higher than mechanical strength of any one of the first metal or the second metal.
[2A] The metal composite material according to aspect [1A], wherein the surface-treatment coating is a plating coating.
[3A] The metal composite material according to aspect [2A], wherein a coefficient of linear expansion of the plating coating is 8.0 × 10⁻⁶/K or more.
[4A] The metal composite material according to aspect [2A] or [3A], wherein a percentage of elongation of the plating coating is 5% or more.
[5A] The metal composite material according to any one of aspects [1] to [4A], wherein a base of the surface-treatment coating is one subjected to strike plating or zincate treatment.
[6A] The metal composite material according to any one of aspects [1A] to [4A], wherein a temperature load at or above a recrystallization temperature is not applied to the whole of the first metal and the second metal in the course of bonding of these metals.
[7A] The metal composite material according to any one of aspects [1A] to [4A], wherein the first metal and the second metal are bonded with the surface-treatment coating being interposed, by an explosion welding method.

An additional aspect belonging to the technical field of the present invention is as follows.
[1B] A different-material joint in which one outermost end is an aluminum alloy and other outermost end is stainless steel or steel, the aluminum alloy is bonded to pure aluminum, and the pure aluminum and the stainless steel or steel are bonded with a silver plating coating being interposed, wherein a joint interface between the aluminum alloy and the pure aluminum and a joint interface between the pure aluminum and the stainless steel or steel are each a wave-like joint interface having a wave height of 1 mm or less.
[2B] The different-material joint according to aspect [1B], wherein a base of the silver plating has a strike plated layer.
[3B] The different-material joint according to aspect [1B] or [2B], wherein each of indication patterns in each of the joint interfaces of the metals, as detected by a JIS Z 2343-1-II Cd-2 penetrant testing, is an indication pattern of 1 mm or less.
[4B] The different-material joint according to any one of aspects [1B] to [3B], wherein the different-material joint has a pipe arrangement shape having a predetermined perimeter, and a total value of lengths of the indication patterns on the respective joint interfaces, as detected by the penetrant testing, is 3% or less of the perimeter.
[5B] The different-material joint according to any one of aspect [1B] to [4B], wherein an impact absorption energy in the Charpy impact test according to JIS Z 2242 at each of the joint interfaces is 15 J or more.
[6B] The different-material joint according to any one of aspects [1B] to [5B], for bonding an aluminum pipe arrangement and a stainless pipe arrangement, wherein an aluminum alloy, pure aluminum and stainless steel are bonded, and the pure aluminum and the stainless steel are bonded with a silver plating coating being interposed.
[7B] The different-material joint according to any one of aspects [1B] to [6B], wherein the respective layers are bonded by explosion welding.

### [ADVANTAGEOUS EFFECTS OF INVENTION]

According to the present invention, it is possible to provide a metal composite material, in which, even when metals which are difficult to bond are combined, an intermediate material is not used, but a surface-treatment coating is included, thereby allowing the metal composite material to be excellent in terms of the strength of a joint interface and low in cost, without application of any temperature load exceeding the recrystallization temperatures of the metals.

### BRIEF DESCRIPTION OF DRAWINGS

FIG. 1 is a cross-sectional view of a metal composite material according to the present embodiment.
FIG. 2 is a cross-sectional view of a different-material joint of the present embodiment.
FIG. 3 is a photograph explaining the definition of a wave height at a joint interface.
FIG. 4 is a photograph explaining a joint interface between pure aluminum and stainless steel or steel.
FIG. 5 is a photograph of an indication pattern in a penetrant test.
FIG. 6 is a photograph explaining the definition of a fracture position in a shear test.
FIG. 7 is a schematic view of a different metal joint of Examples.
FIG. 8 is a photograph of a different metal joint after a penetrant test, of Examples.

### DESCRIPTION OF EMBODIMENTS

Hereinafter, each embodiment of the present invention (hereinafter, referred to as the "present embodiment") will be described in detail.

### [First embodiment]

The present embodiment relates to
a metal composite material of two or more layers constituted with a first metal and a second metal, wherein
the metal composite material includes a surface-treatment coating formed with the first metal and a metal different from the second metal, on each of joint surfaces of either one or both of the first metal or the second metal,
the first metal and the second metal are bonded with the surface-treatment coating being interposed, and
mechanical strength of a joint interface between the first metal and the second metal is higher than mechanical strength of either one of the first metal or the second metal.

For example, the present embodiment relates to a metal composite material of two or more layers constituted with a first metallic sheet 10 and a second metallic sheet 20, as illustrated in FIG. 1. The metal composite material includes a surface-treatment coating 30 in which each of joint surfaces of either one or both of the first metal or the second metal is coated with a thin coating of the first metal and a metal different from the second metal.

Here, the first metal and the second metal are directly bonded with the surface-treatment coating 30 being interposed, and mechanical strength of a joint interface between the first metal and the second metal is higher than mechanical strength of either one of the first metal or the second metal.

### <Surface treatment processing>

Herein, "surface treatment processing" means that a coating is applied onto a surface of either one or both of the first metallic sheet or the second metallic sheet by any of plating, thermal spraying, and vapor-deposition.

### <Recrystallization temperature>

Herein, "recrystallization temperature" refers to a temperature at which the recrystallization defined by JIS G 0201 occurs. This temperature is significantly influenced by the purity or composition of the metal or alloy, the degree of plastic strain in a crystal, the overheating time, and/or the like, and causes the physical properties of the metal material to change. For example, the recrystallization temperature of A1100-H112 in JIS H 4000 is about 180°C, and the recrystallization temperature of SUS304L in JIS G 4305 is about 530°C.

### <Joint interface>

When the metal composite material of the present embodiment is subjected to the shear test of JIS G 0601, either one of the first or second metal is fractured. In other words, preferably, a metal sheet lower in mechanical strength is previously broken before the occurrence of delamination at a joint interface between a first metal sheet and a second metal sheet, according to the shear test. In other words, mechanical strength of the joint interface in the shear test of JIS G 0601 is higher than mechanical strength of either one of the first or second metal. This feature allows bond between the first metal sheet and the second metal sheet to be stronger.

### <Plating>

Herein, "plating" means "electroplating method" defined by JIS H 0400. "Electroplating method" is defined as a method for electrochemically depositing (electrodepositing) a metal on a metal or non-metal surface within the same standard. In addition, "plating coating" encompasses not only a coating deposited by electroplating described above, but also a base for an enhancement in adhesion strength of plating.

Herein, "silver plating" refers to silver electroplating applied to a metal, at a thickness of effective surface of 0.5 µm or more, according to JIS H 8621 or an equivalent standard. In addition, "silver plating coating" herein also encompasses not only a coating deposited by silver electroplating described above, but also a state including a base of strike plating described later.

Herein, "strike plating" refers to plating performed for obtaining a thin coating of an electrodeposited metal for promoting deposition of a plating coating, as performed in a post-process prescribed in JIS H 0400. A base of strike plating can be applied onto a surface of stainless steel or steel, thereby increasing adhesiveness of silver plating to the surface in a post-process.

Herein, "zincate treatment" refers to a method which is zinc substitution treatment and which includes forming a coating of zinc on a surface of an object by a substitution reaction, and is generally performed as pre-treatment in a case where plating is performed on aluminum or an aluminum alloy. Even if separate metal plating is performed after zincate treatment is performed once, the degree of enhancement in adhesiveness is not high. Therefore, double zincate treatment in which zincate treatment is performed twice is generally performed.

### < Coefficient of linear expansion>

The coefficient of linear expansion is the material-specific value determined from the difference in sample temperature and the amount of change in sample length, and is measured according to JIS Z 2285.

In order to prevent cracking, delamination, and/or the like due to heat generated during bonding, the coefficient of linear expansion of a plating coating is preferably 8.0 × 10⁻⁶/K or more, more preferably 8.5 × 10⁻⁶/K or more. In a case where the coefficient of linear expansion is lower than 8.0 × 10⁻⁶/K, cracking, delamination, and/or the like due to heat generated during bonding easily occur(s). In addition, while the upper limit is not particularly defined, the coefficient of linear expansion of a plating coating is preferably 40.0 × 10⁻⁶/K or less from the viewpoint of joinability with the metal(s).

### <Percentage of elongation>

The percentage of elongation is determined from the elongation after fracture defined by JIS Z 2241. In order to prevent cracking, delamination, and/or the like due to plastic deformation by the pressure generated during bonding, the percentage of elongation of a plating coating is preferably 5% or more , more preferably 10% or more. In a case where the percentage of elongation is lower than 5%, cracking, delamination, and/or the like due to plastic deformation by the pressure generated during bonding easily occur(s). In addition, while the upper limit is not particularly defined, the percentage of elongation of a plating coating is preferably 60% or less from the viewpoint of joinability with the metal(s).

### <Explosion welding>

Explosion welding is a method for bonding metals utilizing a high pressure of an explosive material, and is particularly a technique capable of strongly bonding dissimilar metals. A large feature of this technique is to be capable bonding with almost no application of heat to a metal material, and therefore to be capable of strong bonding even in the case of a combination of metals not capable of being bonded by a usual method. Furthermore, it is known as a mechanism of strong bonding that a joint interface of metals bonded by explosion welding exhibits a unique wave form.

The explosive material used for explosion welding is an explosive that generates a detonation wave. It is preferable for strongly bonding metal sheets to use an explosive material exhibiting a velocity of detonation of 1,000 m/sec or more, and it is further preferable for providing more optimal bonding strength to use an explosive material exhibiting a velocity of detonation of 1,500 m to 3,000 m per second, corresponding to one-third to half the speed of sound. Specific examples of the explosive material include
ammonium nitrate; nitrates such as PETN (pentaerythritol tetranitrate); nitroglycerin; nitro compounds such as TNT (trinitrotoluene); and nitramines such as cyclotrimethylene trinitramine and cyclotetramethylene tetranitramine, and these may be each used singly, or as a mixture thereof with any other explosive material ingredient, or any ingredient other than the explosive material.

In addition, the joint interface between the first metal and the second metal preferably has a wave-like shape on a cross-sectional view. The wave height can be measured by observing a cross section of the joint interface with a microscope or a magnifier. When the joint interface has a wave-like shape, more excellent bonding strength is easily obtained. The wave height is preferably 1 mm or less. When the height of the wave height is 1 mm or less, gas leak properties of a different-material joint to be formed are easily suppressed. The wave height is preferably 0.8 mm or less, more preferably 0.5 mm or less. The lower limit value of the wave height is not particularly limited, and the lower limit value is preferably 0.1 µm or more from the viewpoint of real measurement accuracy. The lower limit value is preferably 1 µm or more, more preferably 10 µm or more, further preferably 15 µm or more, especially preferably 20 µm or more from the viewpoint of bonding strength.

### [Second embodiment]

Hereinafter, a second embodiment of the present invention is described.

The present embodiment may be carried out in combination with the first embodiment, and some of the constituent requirements of the present embodiment may be implemented in combination with the first embodiment.

### [Background art relevant to second embodiment]

Since various types of metal materials are used in industrial facilities and apparatuses, many joining portions of dissimilar metals are present. In a case where these dissimilar metal materials are joined and these metal materials cannot be welded, mechanical joining by bolting with a flange is mainly applied. However, it is necessary in the case of flange fastening to use a massive number of bolts during equipment assembling, and therefore not only an excessive amount of time is taken for such assembling, but also the time for periodic maintenance such as retightening is also taken In addition, there are problems such as low reliability in terms of performance, for example, a tendency for leakage to occur.

On the other hand, in the case of a weldable dissimilar metal, welding is merely performed, and therefore fabrication is very simple and can be low in cost. However, metals different in properties are welded and therefore it is difficult to manage aptitude of welders, and set and monitor welding conditions. Therefore, there is a problem that welding defects are likely to occur, and also a problem that the performance may deteriorate due to the formation of an alloy of both metals at the welded part.

Therefore, in a case where use under a severe environment is intended and in a case where very high bonding properties are required, a method is increasingly adopted in which a different metal joint material obtained by metallurgically bonding dissimilar metal materials in advance is used so that metals which are the same in type can be welded.

Examples of the method for fabricating such a different metal joint material formed from dissimilar metal materials include explosion welding, Hot Isostatic Pressing (HIP), and brazing. A configuration may also be adopted in which, while both ends are made of materials to be subjected to similar welding, another material is inserted in order to facilitate the joining of the metal materials at both ends and in order to enhance performance.

In recent years, liquefaction and gasification plant facilities and air separation apparatuses of liquefied natural gas (LNG) and shale gas have been increasingly built all over the world, and many joining portions of dissimilar metals are present in these facilities and apparatuses, which are exposed to extremely low temperature environments. Such gas-related facilities require joint materials with high reliability and high joining performance even under extremely low temperature environments. Therefore, if the joining state at joint interfaces between joint materials is poor, leakage occurs and such leakage can lead to deterioration of mechanical properties of such joint interfaces and then lead to a major accident.

In addition, in carrying vessels for transporting these gases, such gases are cooled to extremely low temperatures and thus liquefied, decreased in volumes, and then carried. Therefore, containers for extremely low temperatures, for storing such gases liquefied, and joints for joining with vessel bodies are required. In particular, in Moss type carrying vessels, joints for joining spherical tanks made of aluminum and vessel bodies made of steel are required. If the joining state at joint interfaces between joint materials is poor, delamination occurs, and such delamination can cause deterioration of mechanical properties of such joint interfaces, resulting in dropping of spherical tanks of close to 1,000 tons and then leading to a major accident.

For example, in PTL 1 above, as described above, a thermal load due to heating occurs in the course of bonding and thus there is a concern about the change in nature of the material or the plated layer, or the bonding interface. Furthermore, there is a concern about a decrease in impact absorption energy.

In addition, in PTL 2 above, as described above, it cannot be said that joinability with the substrate is high. Therefore, there is a concern about the impact absorption energy of the resulting bonded body being extremely low.

In addition, in PTL 3 above, as described above, there is no mention of a method for bonding an aluminum alloy and stainless steel with no intermediate material being interposed.

Furthermore, in PTL 4 above, as described above, if silver or silver alloy layer is to be interposed by explosion welding, silver or a silver alloy having a certain thickness is required to be prepared, thus the number of explosion welding times increases, and therefore there is a concern about a high cost.

### [Object relevant to second embodiment]

An object relevant to the second embodiment is to provide a different metal joint material in which an aluminum alloy is placed at one outermost end and stainless steel or steel is placed at other outermost end, the joint material causing no leakage and having high bonding properties even under an extremely low temperature environment, and a method for producing the joint material.

### [Effects relevant to second embodiment]

The different-material joint relevant to the second embodiment causes no leakage and has high bonding properties even under an extremely low temperature environment.

### [Specific configuration of second embodiment]

Hereinafter, the present embodiment is described in detail.

The present embodiment relates to a different-material joint in which one outermost end is an aluminum alloy and other outermost end is stainless steel or steel, the aluminum alloy is bonded to pure aluminum, and the pure aluminum and the stainless steel or steel are bonded with a coating (surface-treatment coating) being interposed.

In the present embodiment, the term "extremely low temperature" not only means an extremely low temperature to which an air separation apparatus for cooling, liquefying, and distilling air, and thus extracting gases such as oxygen, nitrogen, and hydrogen to be used in each plant of chemical, iron steel, and the like, as liquid forms, a natural gas liquefier for liquefying a natural gas extracted from a gas field, through various processes, and the like are exposed, but also encompasses a temperature up to 4 K (about 269 degrees Celsius below zero) being the boiling point of helium, close to absolute zero (273.15 degrees Celsius below zero).

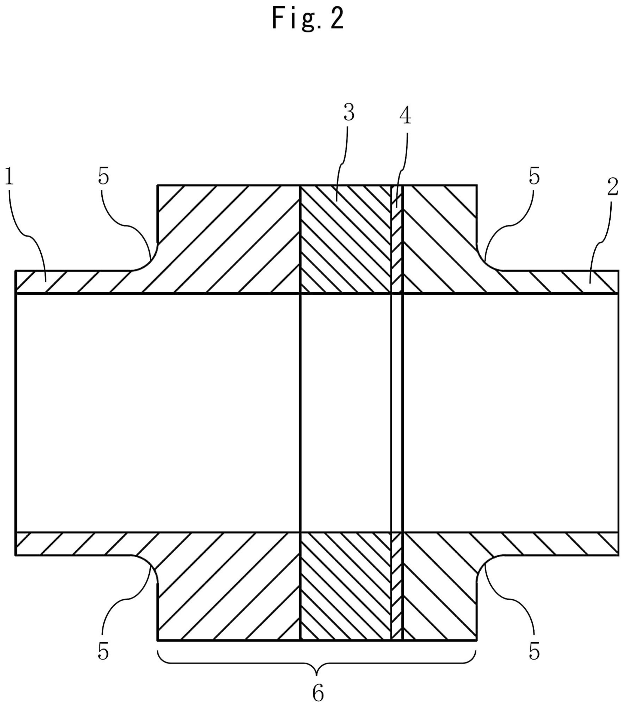

As illustrated in FIG. 2, a first metal 2 and a second metal 3 are bonded with a surface-treatment coating 4 being interposed, in the present embodiment.

Specifically, the present embodiment relates to a different-material joint in which one outermost end is an aluminum alloy 1, other outermost end is stainless steel or steel 2, the aluminum alloy 1 is bonded to pure aluminum 3, and a first metal (in one aspect, the stainless steel or steel 2) and a second metal (in one aspect, the pure aluminum 3) are bonded with a surface-treatment coating (in one aspect, silver plating coating 4) being interposed.

Here, a joint interface between the aluminum alloy 1 and the pure aluminum 3 and a joint interface between the pure aluminum 3 and the stainless steel or steel 2 are each preferably a wave-like joint interface having a wave height of 1 mm or less. Each of the lengths of indication patterns on the respective joint interfaces, as detected by the penetrant testing according to JIS Z 2343-1-II Cd-2 or an equivalent standard, is preferably 1 mm or less.

The different-material joint preferably has a "flange portion" in which an aluminum alloy and stainless steel or steel serve as starting points and which has a larger wall thickness than the outer diameter of a pipe arranged. The starting point of the flange portion (for example, sign 6 illustrated in FIG. 2) has a fillet portion (for example, sign 5 illustrated in FIG. 2) having a circular arc radius of 1 mm or more, so that stress concentration does not occur in the case of application of temperature or pressure due to a fluid flowing in the joint, and therefore stress tends to be reduced as a whole.

In addition, the value obtained by dividing the entire length of the different-material joint by the length of the flange portion is preferably 1.5 or more. A portion other than the flange portion is cut so that the value obtained by dividing the entire length of the different-material joint by the length of the flange portion is 1.5 or more, and thus a structure is obtained in which the vicinity of a joint portion of dissimilar metals can more withstand loads due to the temperature and the pressure. Moreover, weight saving of the entire joint is also achieved. In other words, a structure is obtained in which the load on the entire apparatus is reduced and workability is favorable.

In addition, preferably, an aluminum alloy is placed at one outermost end and stainless steel or steel is placed at the other outermost end.

The joint interface between the first metal and the second metal preferably has a wave-like shape. Simultaneously, the total value of the length of a defect indication pattern in a penetrant testing is preferably 3% or less of the perimeter. When either of the above conditions are satisfied, a joint material for welding is provided which causes minimized gas leakage and has high bonding properties even in an extremely low temperature environment.

A preferred range of the height of the wave height is the same as in the first embodiment.

As described above, the present embodiment relates to a different-material joint in which a surface-treatment coating is provided between a first metal (in one aspect, stainless steel or steel) and a second metal (in one aspect, pure aluminum).

The surface-treatment coating (in one aspect, silver plating coating) is provided, thereby enabling joinability to be enhanced,
a flange portion in which stainless steel or steel and an aluminum alloy serve as starting points is included, thereby not only allowing performance of the different-material joint to be maintained, but also enabling weight saving and an enhancement in workability to be achieved, and
the starting point in the flange portion has an R-shape, thereby enabling stress concentration at the starting point of the flange portion to be avoided.

Furthermore, the joint interface between dissimilar metals has a wave-like interface, thereby controlling the wavelength and the wave height of the wave-like interface to impart both high bonding strength and high leak resistance.

In the present embodiment, "aluminum" refers to Alloy Nos. 1100, 1080, 1070, and 1050 according to ASME Section II, Part B or JIS Standard, or pure aluminum as an equivalent product. The aluminum alloy refers to an alloy containing aluminum other than the pure aluminum, as a main component, and containing a Fe component and a component such as Mn or Mg.

In the present embodiment, "steel, stainless steel" refers to materials described in ASME Section II, Part A or JIS Standard, each containing Fe as a main component, or materials containing a component equivalent to those in the JIS Standard.

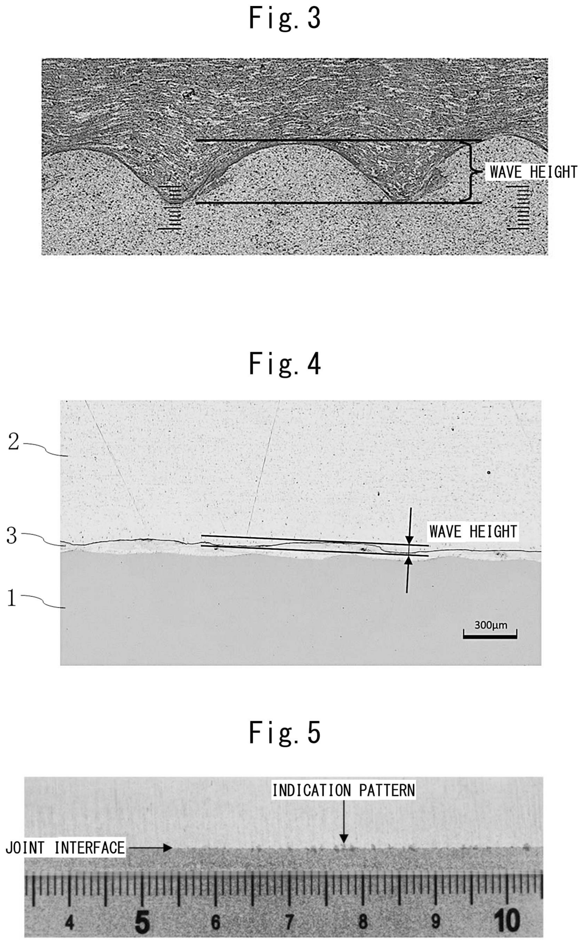

In the present embodiment, "wave height" of the joint interface indicates the difference in height from the top to the valley of the wave, as illustrated in FIG. 3. The wave height means one obtained by measuring any 10 points on the joint interface, on the outer circumference of the joint material, with a magnifying viewer-caliper or an electron microscope, to determine the average value. In addition, as illustrated in FIG. 4, a joint interface between pure aluminum 2 and stainless steel or steel 1 is an interface including a surface-treatment coating (in one aspect, silver plating coating 3), and the wave height of the joint interface is here measured by a wave formed between the pure aluminum 2 and the surface-treatment coating 3.

The penetrant testing is to measure the size of a red indication pattern detected and the number of such indication patterns with a measuring machine such as a caliper, according to JIS Z 2343-1-II Cd-2 or an equivalent standard. Specifically, such an indication pattern refers to a red pattern where a scratch present on a material surface is visually observed with a penetration liquid used in the penetrant testing , as illustrated in FIG. 5, and the size of a pattern detected and the number of such patterns are here measured with a measuring machine such as a caliper. In the present embodiment, in the case of a pipe arrangement joint, preferably, the length of each of such indication patterns is 1 mm or less or the total value of the lengths of such indication patterns is 3% or less of the perimeter. A case where such indication patterns are not present is also included in the case of 1 mm or less.

The impact absorption energy is a value obtained from the result of a test carried out with a V-notched test piece according to the Charpy impact test method of a metal material of JIS Z 2242. In the case of a pipe arrangement joint, the impact absorption energy at each joint interface is preferably 15 J or more.

The evaluation test of the amount of leakage is performed with a vacuum spraying system according to the helium leakage test method of JIS Z 2331 or an equivalent standard.

Herein, the different metal joint of the present embodiment can be used not only for various pipe arrangements for the air separation apparatus for extracting gases such as oxygen, nitrogen, and hydrogen to be used in each plant of chemical, iron steel, and the like, as liquid forms, and the natural gas liquefier for liquefying a natural gas extracted from a gas field, through various processes, but also in the case of welding and joining of aluminum or an aluminum alloy in a building structural object, transport equipment, and the like, with any of other various kinds of metals.

In the present embodiment, it is known as a mechanism of strong bonding in "explosion welding" that a joint interface of metals bonded by explosion welding exhibits a unique wave form. The wave height of the joint interface can be adjusted by the energy during explosion welding, the amount of explosive, and/or the like.

### [Third embodiment]

Hereinafter, a third embodiment of the present invention is described.

The present embodiment may be carried out in combination with the first embodiment and/or the second embodiment, and some of constituent requirements of the present embodiment may be carried out in combination with the first embodiment and/or the second embodiment.

In the present embodiment, the surface-treatment coating is not limited only to specific configurations respectively described in the first embodiment and the second embodiment.

For example, the surface-treatment coating in the present embodiment is preferably a plating coating, and is preferably constituted with at least one metal selected from the group consisting of silver, nickel, copper, zinc, platinum, gold, and tin.

Regardless of which configurations are adopted, any of the above configurations may be adopted in the present invention.

In the present embodiment, the thickness of the surface-treatment coating is preferably 0.5 µm or more and less than 1000 µm. When the thickness of the surface-treatment coating is 0.5 µm or more, bonding strength of the first metal and the second metal is easily sufficiently ensured, and therefore a different-material joint is easily excellent in leak resistance performance. In addition, a thickness of less than 1000 µm is preferred because surface-treatment coating is easily formed, and furthermore the amount of a metal used for an intermediate layer can be reduced, and thus contribution to weight saving is also provided. The thickness more preferably ranges from 0.5 to 900 µm, further preferably from 0.5 to 500 µm. The thickness of the surface-treatment coating can be detected by observing a cross section of a layer forming the coating with an optical microscope, an electron microscope, or the like.

In the present embodiment, the first metal is not limited only to specific configurations respectively described in the first embodiment and the second embodiment.

For example, the first metal in the present embodiment is preferably at least one selected from the group consisting of copper, stainless steel, and steel, but not limited thereto. In addition, the thickness of the first metal is any value and is not particularly limited. The thickness is preferably 1 mm or more and 200 mm or less, more preferably 1 mm or more and 150 mm or less, further preferably 1 mm or more and 100 mm or less from the viewpoint that both processability and bonding strength are satisfied. Regardless of which configurations are adopted, any of the above configurations may be adopted in the present invention.

Herein, a relatively thick metal and a relatively thin metal among metals to be bonded may be respectively called "base metal" and "clad metal" in the art of the clad material. In the present disclosure, the first metal may serve as a base metal and the second metal may serve as a clad metal, or the second metal may serve as a base metal and the first metal may serve as a clad metal.

In the present embodiment, the second metal is not limited only to specific configurations respectively described in the first embodiment and the second embodiment.

For example, the second metal in the present embodiment is preferably at least one selected from the group consisting of an aluminum alloy, pure aluminum, tungsten, a titanium alloy, and titanium. In addition, the thickness of the second metal can be any value and is not particularly limited. The thickness is preferably 1 mm or more and 200 mm or less, more preferably 1 mm or more and 100 mm or less, further preferably 1 mm or more and 50 mm or less from the viewpoint that both processability and bonding strength are satisfied. Regardless of which configurations are adopted, any of the above configurations may be adopted in the present invention.

In the present embodiment, preferably, the metal composite material has a structure of three or more layers,
one outermost end is an aluminum alloy and other outermost end is stainless steel or steel, and
the aluminum alloy is bonded to pure aluminum and the pure aluminum and the stainless steel or steel are bonded with a surface-treatment coating being interposed. The surface-treatment coating is preferably a plating coating.

According to such a configuration, the configuration of the present invention is easily exhibited.

In the present embodiment, it is preferable to have a thin coating formed by strike plating or zincate treatment, as a base of the surface-treatment coating.

According to such a configuration, the configuration of the present invention is easily exhibited.

A further aspect of the present embodiment relates to a different-material joint constituted with the metal composite material.

Such a different-material joint is constituted with the metal composite material of the present embodiment, and therefore is excellent in strength of a joint interface and can be provided at a lower cost.

The metal composite material and the different-material joint, described in the first to the third embodiments, can be utilized for every machine, apparatus, facility, construction, and the like each having a metal joint portion in which different metals are joined. The metal composite material is advantageous for weight saving of a structural body, and accordingly can be suitably used in a heat exchanger, a heatsink, a joint material for welding, air separation apparatus, a chemical tanker, and a pressure container. The different-material joint is strong against impacts and has excellent gas leak resistance, and therefore can be used in not only a pipe arrangement component, a cryogenic container for preserving a liquefied gas, and a high-pressure gas pressure container, but also a transport machinery component for vehicles, railways, and aviation.

### EXAMPLES

Examples and Comparative Examples of the present invention are shown below, but the present invention is not limited to these Examples and Comparative Examples.

### [Examples relevant to first embodiment]

### <Shear test>

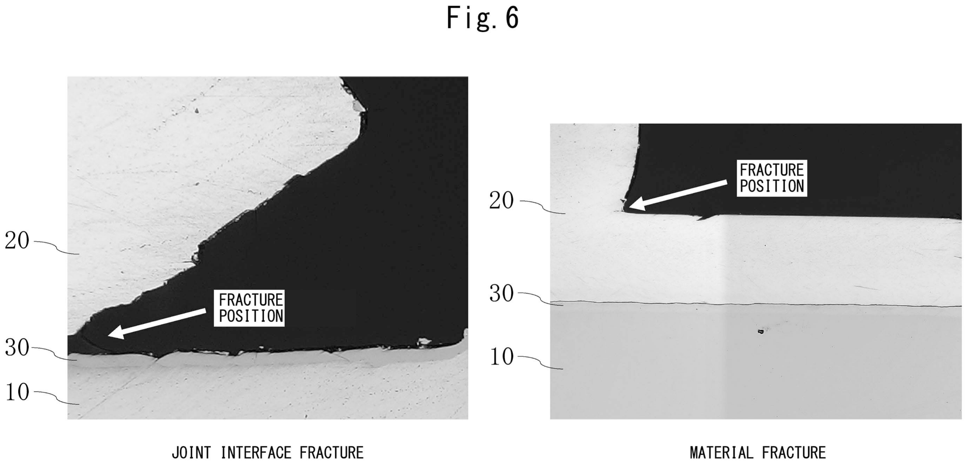

The test was prescribed according to the clad steel test method of JIS G 0601. As illustrated in FIG. 6, a test piece after the shear test was observed, and a case where a second metal 20 was attached in the case of a first metal 10 or the first metal 10 was attached in the case of the second metal 20 was determined as material fracture of the metal attached. On the other hand, in terms of joint interface fracture, a case where a plating coating 30 or the second metal 20 was not attached in the case of the first metal 10 or the plating coating 30 or the first metal 10 was not attached in the case of the second metal 20 and the joining surface was exposed was determined as joint interface fracture.

### <Ultrasonic testing>

The ultrasonic testing was carried out according to the ultrasonic testing prescribed in the clad steel test method of JIS G 0601. The propagation time was put on the horizontal axis and the sound pressure was put on the vertical axis, and a case where, when the back wall echo height was set to 80%, a defect echo exhibiting an interface echo height of 40% or more was not detected was determined as no defect.

### < Coefficient of linear expansion>

The coefficient of linear expansion was determined from the material-specific value determined from the difference in sample temperature and the amount of change in sample length, according to JIS Z 2285.

### <Percentage of elongation>

The percentage of elongation was determined from the elongation after fracture defined by JIS Z 2241.

### <<Example 1>>

The first metal sheet used was stainless steel (JIS G 4305: SUS304L, sheet thickness: 50 mm), and the second metal sheet used was industrial pure aluminum (JIS H 4000: A1100 P-H112, sheet thickness: 12 mm). Surface treatment of the joint surface of the first metal sheet was carried out by applying nickel strike plating for providing a base, and then silver plating, to a surface of the first metal sheet.

Next, a predetermined gap was provided between the first metal sheet whose surface was coated with a silver plating coating and the second metal sheet, a powdery explosive material containing ammonium nitrate as a main ingredient was placed at a predetermined thickness, and then the explosive material was detonated using a detonator with a diameter of 6 mm to perform explosion welding. As a result, the first metal sheet and the second metal sheet could be bonded. This bonding was then determined to be bonding of the whole surface with no defect, as a result of the ultrasonic testing (JIS G 0601, back wall echo method).

Next, four shear test samples in total were cut out from the metal composite material, and the shear test (JIS G 0601) was performed. As a result, as shown in the following Table, each fracture position in the shear test exhibited fracture of pure aluminum, namely, sufficient joint interface strength was obtained.

### <<Example 2>>

The first metal sheet used was stainless steel (JIS G 4305: SUS316L, sheet thickness: 30 mm), and the second metal sheet used was an aluminum alloy (JIS H 4000: A3003 P-O, sheet thickness: 10 mm). Surface treatment of the joint surface of the second metal sheet was carried out by applying double zincate treatment for providing a base, and then copper plating, to a surface of the second metal sheet.

Next, a predetermined gap was provided between the first metal sheet and the second metal sheet whose surface was coated with a copper plating coating, a powdery explosive material containing ammonium nitrate as a main ingredient was placed at a predetermined thickness, and then the explosive material was detonated using a detonator with a diameter of 6 mm to perform explosion welding. As a result, the first metal sheet and the second metal sheet could be bonded. This bonding was then determined to be bonding of the whole surface with no defect, as a result of the ultrasonic testing (JIS G 0601, back wall echo method).

Next, four shear test samples in total were cut out from the metal composite material, and the shear test (JIS G 0601) was performed. As a result, as shown in the following Table, each fracture position in the shear test exhibited fracture of the aluminum alloy, namely, sufficient joint interface strength was obtained.

### <<Example 3>>

The first metal sheet used was general structural rolled steel (JIS G 3101: SS400, sheet thickness: 5 mm), and the second metal sheet used was pure tungsten (ASTM B760-07, sheet thickness: 1 mm). Surface treatment of the joint surface of the first metal sheet was carried out by applying nickel plating to a surface of the first metal sheet.

Next, a predetermined gap was provided between the first metal sheet whose surface was coated with a nickel plating coating and the second metal sheet, a powdery explosive material containing ammonium nitrate as a main ingredient was placed at a predetermined thickness, and then the explosive material was exploded with a detonator having a diameter of 6 mm to perform explosion welding. As a result, the first metal sheet and the second metal sheet could be bonded. This bonding was then determined to be bonding of the whole surface with no defect, as a result of the ultrasonic testing (JIS G 0601, back wall echo method).

Next, four shear test samples in total were cut out from the metal composite material, and the shear test (JIS G 0601) was performed. As a result, as shown in the following Table, each fracture position in the shear test exhibited fracture of the structural steel, namely, sufficient joint interface strength was obtained.

### <<Example 4>>

The first metal sheet used was oxygen-free copper (JIS H 3100: C1020 P-1/4H, sheet thickness: 100 mm), and the second metal sheet used was pure aluminum (JIS H 4000: A1050 P-H112, sheet thickness: 6 mm). Surface treatment of the joint surface of the second metal sheet was carried out by applying double zincate treatment for providing a base, and then platinum plating, to a surface of the second metal sheet.

Next, a predetermined gap was provided between the first metal sheet and the second metal sheet whose surface was coated with a platinum plating coating, a powdery explosive material containing ammonium nitrate as a main ingredient was placed at a predetermined thickness, and then the explosive material was detonated using a detonator with a diameter of 6 mm to perform explosion welding. As a result, the first metal sheet and the second metal sheet could be bonded. This bonding was then determined to be bonding of the whole surface with no defect, as a result of the ultrasonic testing (JIS G 0601, back wall echo method).

Next, four shear test samples in total were cut out from the metal composite material, and the shear test (JIS G 0601) was performed. As a result, as shown in Table below, each fracture position in the shear test exhibited fracture of pure aluminum, namely, sufficient joint interface strength was obtained.

### <<Example 5>>

The first metal sheet used was rolled steel for a welding structure (JIS G 3106: SM400B, sheet thickness: 22 mm), and the second metal sheet used was an aluminum alloy (JIS H 4000: A3003 P-O, sheet thickness: 13 mm). Surface treatment of the joint surface of the first metal sheet was carried out by applying nickel strike plating for providing a base, and then silver plating, to a surface of the first metal sheet.

Next, a predetermined gap was provided between the first metal sheet whose surface was coated with a silver plating coating and the second metal sheet, a powdery explosive material containing ammonium nitrate as a main ingredient was placed at a predetermined thickness, and the explosive material was detonated using a detonator with a diameter of 6 mm to perform explosion welding. As a result, the first metal sheet and the second metal sheet could be bonded, and this bonding was determined to be bonding of the whole surface with no defect, as a result of the ultrasonic testing (JIS G 0601, back wall echo method).

Next, four shear test samples in total were cut out from the metal composite material, and the shear test (JIS G 0601) was performed. As a result, as shown in Table below, each fracture position in the shear test exhibited fracture of the aluminum alloy, namely, sufficient joint interface strength was obtained.

### <<Example 6>>

The first metal sheet used was stainless steel (JIS G 4305: SUS304L, sheet thickness: 20 mm), and the second metal sheet used was industrial pure titanium (JIS H 4600: TP270C, sheet thickness: 2 mm). Surface treatment of the joint surface of the first metal sheet was carried out by applying nickel strike plating for providing a base, and then nickel plating, to a surface of the first metal sheet.

Next, a predetermined gap was provided between the first metal sheet whose surface was coated with a nickel plating coating and the second metal sheet, a powdery explosive material containing ammonium nitrate as a main ingredient was placed at a predetermined thickness, and the explosive material was detonated using a detonator with a diameter of 6 mm to perform explosion welding. As a result, the first metal sheet and the second metal sheet could be bonded, and this bonding was determined to be bonding of the whole surface with no defect, as a result of the ultrasonic testing(JIS G 0601, back wall echo method).

Next, four shear test samples in total were cut out from the metal composite material, and the shear test (JIS G 0601) was performed. As a result, as shown in Table below, each fracture position in the shear test exhibited fracture of titanium, namely, sufficient joint interface strength was obtained.

### <<Comparative Example 1>>

The first metal sheet used was stainless steel (JIS G 4305: SUS304L, sheet thickness: 50 mm), and the second metal sheet used was industrial pure aluminum (JIS H 4000: A1100 P-H112, sheet thickness: 12 mm). A predetermined gap was provided between the first metal sheet and the second metal sheet, a powdery explosive material containing ammonium nitrate as a main ingredient was placed at a predetermined thickness, and then the explosive material was detonated using a detonator with a diameter of 6 mm to perform explosion welding. As a result, the first metal sheet and the second metal sheet could be bonded. However, the range of this bonding was determined to be 30% of the whole, as a result of the ultrasonic testing (JIS G 0601, back wall echo method).

Next, four shear test samples in total were cut out from the metal composite material, and the shear test (JIS G 0601) was performed. As a result, as shown in Table below, each fracture position in the shear test exhibited fracture at the joint interface, namely, sufficient shear strength was not obtained.

### <<Comparative Example 2>>

The first metal sheet used was rolled steel for a general structure (JIS G 3101: SS400, sheet thickness: 5 mm), and the second metal sheet used was pure tungsten (ASTM B760-07, sheet thickness: 1 mm). A predetermined gap was provided between the first metal sheet and the second metal sheet, a powdery explosive material containing ammonium nitrate as a main ingredient was placed at a predetermined thickness, and then the explosive material was detonated using a detonator with a diameter of 6 mm to perform explosion welding. As a result, the first metal sheet and the second metal sheet could be bonded. However, many cracks were observed on a surface of pure tungsten being the second metal sheet, namely, a usable product was not obtained. In addition, the shear test could not be carried out as shown in Table below.

**[Table 1]**

| | First metal/Second metal (thickness) | Surface treatment · Base | Coefficient of linear expansion: Surface treatment · Base | Percentage of elongation: Surface treatment · Base | Shear test: Fracture position |
|---|---|---|---|---|---|
| Example 1 | SUS304L/A1100P-H112 (50mm/12mm) | Silver plating · Nickel strike plating | 19.7 × 10⁻⁶/K · 13.3 × 10⁻⁶/K | 40 % · 40% | A1100P-H112 |
| Example 2 | SUS316L/A3003P-O (30mm/10mm) | Copper plating · Double zincate treatment | 17.7 × 10⁻⁶/K · 39.7×10⁻⁶/K | 30 % · 25% | A3003P-O |
| Example 3 | SS400/W (5mm/1mm) | Nickel plating | 13.3 × 10⁻⁶/K | 40% | SS400 |
| Example 4 | C1020-1/4H/A1050P-H112 (100mm/6mm) | Platinum plating · Double zincate treatment | 8.9 × 10⁻⁶/K · 39.7 × 10⁻⁶/K | 10 % · 25% | A1050P-H112 |
| Example 5 | SM400B/A3003P-O (22mm/13mm) | Silver plating · Nickel strike plating | 19.7 × 10⁻⁶/K · 13.3 × 10⁻⁶/K | 40% · 40% | A3003P-O |
| Example 6 | SUS304L/TP270C (20mm/2mm) | Nickel plating · Nickel strike plating | 13.3 × 10⁻⁶/K · 13.3 × 10⁻⁶/K | 40% · 40% | TP270C |
| Comparative Example 1 | SUS304L/A1100P-H112 (50mm/12mm) | - | - | - | Fracture at joint interface |
| Comparative Example 2 | SS400/W (5mm/1mm) | - | - | - | Impracticable |

### [Examples relevant to second embodiment and third embodiment]

### <<Example 1A>>

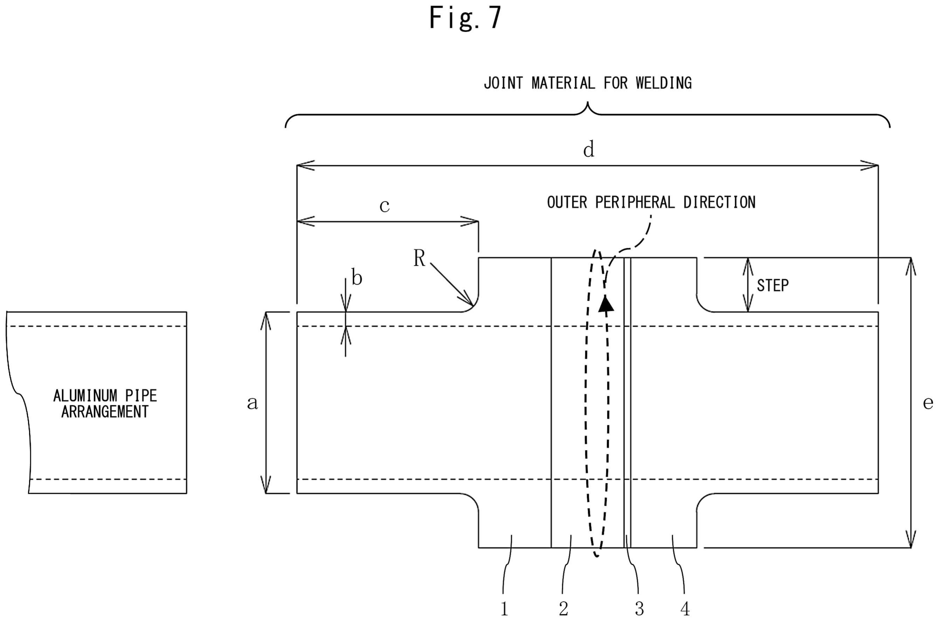

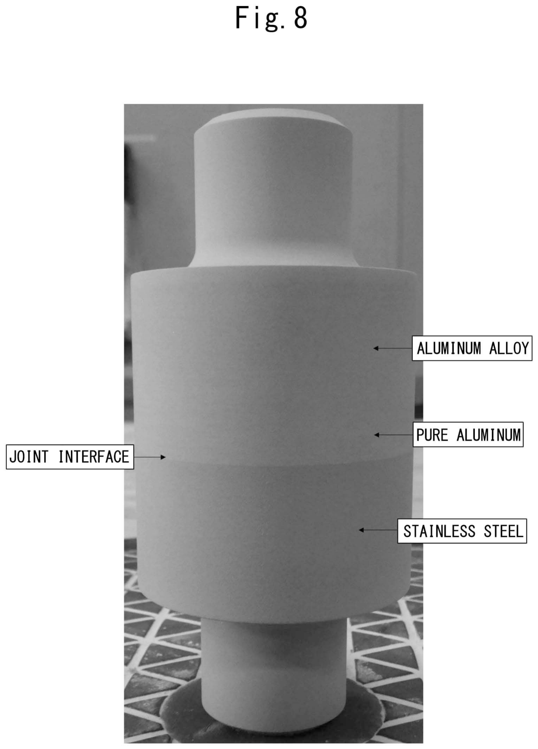

A three-layer clad composed of an aluminum alloy (JIS H 4000: A5083 P-O, sheet thickness: 50 mm), pure aluminum (JIS H 4000: A1100 P-H112, sheet thickness: 12 mm) and stainless steel (JIS G 4305: SUS304L, sheet thickness: 50 mm) was manufactured by an explosion welding method. A surface of the stainless steel was subjected to nickel strike plating (thickness: 1 µm) for providing a base, then silver plating (thickness: 50 µm), and thereafter explosion welding. The ultrasonic testing according to JIS G 0601 was performed with respect to this clad, a different-material joint of a shape illustrated in FIG. 7 was manufactured from the position where bonding was confirmed, and performance evaluation was performed (a = 27 mm, b = 3.9 mm, c = 25 mm, d = 106 mm, e = 49 mm, R = 5 mm, the value obtained by dividing the entire length of the different-material joint by the length of the flange portion: 1.9). The wavelength and the wave height of each joint interface were respectively 346 µm and 113 µm in the case of the joint interface between the aluminum alloy and the pure aluminum, and were respectively 627 and 48 µm in the case of the joint interface between the pure aluminum and the stainless steel. The resulting joint was subjected to a helium leak test according to "helium leakage test method" of JIS Z 2331, and thus the result was 0.9 × 10⁻¹⁰ Pa·m³/sec (ordinary temperature), namely, it was found that the joint had excellent leak resistance performance. In addition, the penetrant testing was performed with respect to the whole surface of the outer peripheral surface, according to JIS Z 2343-1-II Cd-2, for measuring the length or the diameter of an indication pattern to be detected, and thus such an indication pattern was not detected as illustrated in FIG. 8. In addition, a Charpy impact test piece was produced and cooled to -196°C (liquid nitrogen), and then subjected to an impact test according to JIS Z 2242, and thus an absorption energy value of 54 J was obtained at the joint interface between the aluminum alloy and the pure aluminum and an absorption energy value of 57 J was obtained at the joint interface between the pure aluminum and the stainless steel.

### <<Example 2A>>

A three-layer clad composed of an aluminum alloy (ASME SB-209 3003-O, sheet thickness: 50 mm), pure aluminum (ASME SB-209 1100-H112, sheet thickness: 12 mm) and stainless steel (ASME SA-240 Type 316L, sheet thickness: 50 mm) was manufactured by an explosion welding method. A surface of the stainless steel was subjected to nickel strike plating (thickness: 1 µm) for providing a base, then silver plating (thickness: 400 µm), and thereafter explosion welding. The ultrasonic testing according to JIS G 0601 was performed with respect to this clad, a different-material joint of a shape illustrated in FIG. 7 was manufactured from the position where bonding was confirmed, and performance evaluation was performed (a = 33 mm, b = 4.6 mm, c = 25 mm, d = 106 mm, e = 56 mm, R = 5 mm, the value obtained by dividing the entire length of the different-material joint by the length of the flange portion: 1.9). The wavelength and the wave height of each joint interface were respectively 252 µm and 81 µm in the case of the joint interface between the aluminum alloy and the pure aluminum, and were respectively 640, and 42 µm in the case of the joint interface between the pure aluminum and the stainless steel. The resulting joint was subjected to a helium leak test according to "helium leakage test method" of JIS Z 2331, and thus the result was 1.2 × 10⁻¹⁰ Pa·m³/sec (ordinary temperature), namely, it was found that the joint had excellent leak resistance performance. In addition, the penetrant testing was performed with respect to the whole surface of the outer peripheral surface, according to JIS Z 2343-1-II Cd-2, for measuring the length or the diameter of an indication pattern to be detected, and thus such an indication pattern was not detected. In addition, a Charpy impact test piece was produced and cooled to -196°C (liquid nitrogen), and then subjected to an impact test according to JIS Z 2242, and thus an absorption energy value of 58 J was obtained at the joint interface between the aluminum alloy and the pure aluminum and an absorption energy value of 58 J was obtained at the joint interface between the pure aluminum and the stainless steel.

### <<Example 3A>>

A four-layer clad composed of an aluminum alloy (JIS H 4000: A5083 P-O, sheet thickness: 40 mm), pure aluminum (JIS H 4000: A1100 P-H112, sheet thickness: 12 mm), pure titanium (JIS H 4600:TP270C, sheet thickness: 2 mm) and stainless steel (JIS G 4305: SUS304L, sheet thickness: 30 mm) was manufactured by an explosion welding method. A surface of the stainless steel was subjected to nickel strike plating (thickness: 1 µm) for providing a base, then nickel plating (thickness: 50 µm), and thereafter explosion welding. The ultrasonic testing according to JIS G 0601 was performed with respect to this clad, a different-material joint of a shape illustrated in FIG. 7 was manufactured from the position where bonding was confirmed, and performance evaluation was performed (a = 114.3 mm, b = 6.02 mm, c = 20 mm, d = 78 mm, e = 148 mm, R = 5 mm, the value obtained by dividing the entire length of the different-material joint by the length of the flange portion: 2.1). The wavelength and the wave height of each joint interface were respectively 711 µm and 255 µm in the case of the joint interface between the aluminum alloy and the pure aluminum, were respectively 958 µm and 99 µm in the case of the joint interface between the pure aluminum and the pure titanium, and were respectively 498 µm and 113 µm in the case of the joint interface between the pure titanium and the stainless steel. The resulting joint was subjected to a helium leak test according to "helium leakage test method" of JIS Z 2331, and thus the result was 1.3 × 10⁻¹¹ Pa·m³/sec (ordinary temperature), namely, it was found that the joint had excellent leak resistance performance. In addition, the penetrant testing was performed with respect to the whole surface of the outer peripheral surface, according to JIS Z 2343-1-II Cd-2, for measuring the length or the diameter of an indication pattern to be detected, and thus such an indication pattern was not detected. In addition, a Charpy impact test piece was produced and cooled to -196°C (liquid nitrogen), and then subjected to an impact test according to JIS Z 2242, and thus an absorption energy value of 51 J was obtained at the joint interface between the aluminum alloy and the pure aluminum, an absorption energy value of 55 J was obtained at the joint interface between the pure aluminum and the pure titanium, and an absorption energy value of 119 J was obtained at the joint interface between the pure titanium and the stainless steel.

### <<Example 4A>>

A three-layer clad composed of an aluminum alloy (JIS H 4000: A3003 P-O, sheet thickness: 13 mm), pure titanium (JIS H 4600: TP270C, sheet thickness: 2 mm) and stainless steel (JIS G 4305: SUS304L, sheet thickness: 22 mm) was manufactured by an explosion welding method. A surface of the stainless steel was subjected to nickel strike plating (thickness: 1 µm) for providing a base, then nickel plating (thickness: 200 µm), and thereafter explosion welding. The ultrasonic testing according to JIS G 0601 was performed with respect to this clad, and a joint material of 9 mm × 250 mm was cut out at the original sheet thickness with a band saw, from the position where bonding was confirmed. A cut surface of the outer periphery of the joint material was polished and surface-finished. The wavelength and the wave height of each joint interface were respectively 812 µm and 116 µm in the case of the joint interface between the aluminum alloy and the pure titanium, and were respectively 623 µm and 145 µm in the case of the joint interface between the pure titanium and the stainless steel. In addition, the penetrant testing was performed with respect to the whole surface, according to JIS Z 2343-1-II Cd-2, for measuring the length or the diameter of an indication pattern to be detected, and thus such an indication pattern was not detected. In addition, a Charpy impact test piece was produced and cooled to -196°C (liquid nitrogen), and then subjected to an impact test according to JIS Z 2242, and thus an absorption energy value of 48 J was obtained at the joint interface between the aluminum alloy and the pure titanium and an absorption energy value of 106 J was obtained at the joint interface between the pure titanium and the stainless steel.

### <<Comparative Example 1A>>

A three-layer clad composed of an aluminum alloy (JIS H 4000: A5083 P-O, sheet thickness: 50 mm), industrial pure aluminum (JIS H 4000: A1100 P-H112, sheet thickness: 12 mm) and stainless steel (JIS G 4305: SUS304L, sheet thickness: 50 mm) was manufactured by an explosion welding method. The ultrasonic testing according to JIS G 0601 was performed with respect to this clad, a Charpy impact test piece was produced from the position where bonding was confirmed, and cooled to -196°C (liquid nitrogen), and then subjected to an impact test according to JIS Z 2242, and thus an absorption energy value of 4.4 J was obtained at the joint interface between the aluminum alloy and the pure aluminum (the fracture position corresponded to the joint interface between the pure aluminum and the stainless steel) and an absorption energy value of 1.5 J was obtained at the joint interface between the pure aluminum and the stainless steel. In other words, it was confirmed that the clad falls outside the range in a preferred aspect of the present embodiment. In addition, the maximum length with respect to the indication patterns was 4.5 mm, and the total value of the lengths of the indication patterns was 60% of the perimeter.

### <<Comparative Example 2A>>

A three-layer clad composed of an aluminum alloy (JIS H 4000: A5083 P-O, sheet thickness: 50 mm), pure aluminum (JIS H 4000: A1100 P-H112, sheet thickness: 12 mm) and stainless steel (JIS G 4305: SUS304L, sheet thickness: 50 mm) was manufactured by an explosion welding method. A surface of the pure aluminum was subjected to double zincate treatment for providing a base, then copper plating (thickness: 50 µm), and thereafter explosion welding. The ultrasonic testing according to JIS G 0601 was performed with respect to this clad, a Charpy impact test piece was produced from the position where bonding was confirmed, and cooled to -196°C (liquid nitrogen), and then subjected to an impact test according to JIS Z 2242, and thus an absorption energy value of 6.3 J was obtained at the joint interface between the aluminum alloy and the pure aluminum (the fracture position corresponded to the joint interface between the pure aluminum and the stainless steel) and an absorption energy value of 3.3 J was obtained at the joint interface between the pure aluminum and the stainless steel. In other words, it was confirmed that the clad falls outside the range in a preferred aspect of the present embodiment. In addition, the maximum length with respect to the indication patterns was 1.8 mm, and the total value of the lengths of the indication patterns was 25% of the perimeter.

### INDUSTRIAL APPLICABILITY

### [Industrial applicability relevant to first embodiment]

According to the present invention, a metal composite material in which metals which are difficult to bond are strongly bonded can be obtained at a low cost by not using an intermediate material, but interposing a coating subjected to surface treatment, for such bonding. Therefore, the present invention is extremely industrially useful. The metal composite material of the present invention is applicable for weight saving of a structural body, and is applicable to a heat exchanger, a heatsink, a joint material for welding, an air separation apparatus, a chemical tanker, a pressure container, a pipe arrangement component, a cryogenic container, a transport machinery component, and the like. It is noted that the applicability of the present invention is not limited thereto.

### [Industrial applicability relevant to second embodiment and third embodiment]

Facilities and apparatuses in which performance under an extremely low temperature environment and/or in high vacuum is demanded often include media which are high in pressure and which are hazardous substances, and therefore, if members thereof are damaged, not only economic loss, but also personal suffering can be caused. Therefore, a case where a different-material joint is in a poor joining state and thus is low in joining performance leads to the occurrence and progression of cracking due to the change over time, and unintended stress concentration, thermal cycling, and/or the like, and therefore is capable of causing the above problems. The joint material for welding, relevant to the second embodiment, can exhibit high reliability performance and high joining performance even under an extremely low temperature environment with a liquefied natural gas (LNG), liquid nitrogen, liquid hydrogen, liquid helium, or the like. Therefore, the joint material can be suitably utilized in facilities and apparatuses in which performance under an extremely low temperature environment and/or in high vacuum is demanded. In addition, silver plating can be used to allow for a reduction in amount of use of expensive silver which has been conventionally used for intermediate materials, and furthermore allow for a decrease in the number of bonding steps which have been demanded in conventional bonding methods, and therefore the present invention can allow for a significant reduction in cost as compared with conventional one.

### REFERENCE SIGNS LIST

(Signs in FIG. 1)
   10 first metallic sheet
   20 second metallic sheet
   30 surface-treatment coating
(Signs in FIG. 2)
   1 aluminum alloy
   2 first metal (stainless steel or steel)
   3 second metal (aluminum)
   4 surface-treatment coating (silver plating coating)
   5 fillet portion
   6 flange portion
(Signs in FIG. 4)
   1 first metal (stainless steel or steel)
   2 second metal (aluminum)
   3 surface-treatment coating (silver plating coating)
(Signs in FIG. 6)
   10 first metal
   20 second metal
   30 surface-treatment coating (plating coating)
(Signs in FIG. 7)
   1 aluminum alloy
   2 second metal (aluminum)
   3 surface-treatment coating (silver plating coating)
   4 first metal (stainless steel or steel)

## Claims

1. A metal composite material of two or more layers constituted with a first metal and a second metal, wherein
the metal composite material comprises a surface-treatment coating formed with the first metal and a metal different from the second metal, on each of joint surfaces of either one or both of the first metal or the second metal,
the first metal and the second metal are bonded with the surface-treatment coating being interposed, and
mechanical strength of a joint interface between the first metal and the second metal is higher than mechanical strength of either one of the first metal or the second metal.

2. The metal composite material according to claim 1, wherein the surface-treatment coating is a plating coating.

3. The metal composite material according to claim 2, wherein a coefficient of linear expansion of the plating coating is 8.0 × 10⁻⁶/K or more.

4. The metal composite material according to claim 2 or 3, wherein a percentage of elongation of the plating coating is 5% or more.

5. The metal composite material according to any one of claims 1 to 4, comprising a thin coating formed by strike plating or zincate treatment, as a base of the surface-treatment coating.

6. The metal composite material according to any one of claims 1 to 5, wherein the surface-treatment coating is constituted with at least one metal selected from the group consisting of silver, nickel, copper, zinc, platinum, gold, and tin, or an alloy thereof.

7. The metal composite material according to any one of claims 1 to 6, wherein a thickness of the surface-treatment coating is 0.5 µm or more and less than 1000 µm.

8. The metal composite material according to any one of claims 1 to 7, wherein
the second metal is at least one selected from the group consisting of an aluminum alloy, pure aluminum, a titanium alloy, and titanium, and
the first metal is stainless steel or steel.

9. The metal composite material according to any one of claims 1 to 8, wherein
the metal composite material has a structure of three or more layers,
one outermost end is an aluminum alloy and other outermost end is stainless steel or steel, and
the aluminum alloy is bonded to pure aluminum and the pure aluminum and the stainless steel or steel are bonded with the surface-treatment coating being interposed.

10. The metal composite material according to any one of claims 1 to 9, wherein the joint interface has a wave-like shape, and the wave height is 1 mm or less.

11. A different-material joint constituted with the metal composite material according to any one of claims 1 to 10.

12. The different-material joint according to claim 11, wherein each of indication patterns in joint interfaces each of the metals, as detected by a JIS Z 2343-1-II Cd-2 penetrant testing , is an indication pattern of 1 mm or less.

13. The different-material joint according to claim 11, wherein the different-material joint has a pipe arrangement shape having a predetermined perimeter, and a total value of lengths of the indication patterns in the respective joint interfaces, as detected by the penetrant testing, is 3% or less of the perimeter.

14. The different-material joint according to claim 11, wherein an impact absorption energy in the Charpy impact test according to JIS Z 2242 at each of the joint interfaces is 15 J or more.

15. A pipe arrangement component comprising a metal joint portion constituted with the metal composite material according to any one of claims 1 to 10.

16. A cryogenic container comprising a metal joint portion constituted with the metal composite material according to any one of claims 1 to 10.

17. A pressure container comprising a metal joint portion constituted with the metal composite material according to any one of claims 1 to 10.

18. A transport machinery component comprising a metal joint portion constituted with the metal composite material according to any one of claims 1 to 10.

19. A method for producing a metal composite material, the method comprising:
a step of subjecting each of joint surfaces of either one or both of a first metal or a second metal, to surface treatment processing, to form a surface-treatment coating constituted with the first metal and a metal different from the second metal; and
a step of bonding the first metal and the second metal with surface-treatment coating being interposed, by an explosion welding method.

20. The production method according to claim 19, wherein the surface-treatment coating is a plating coating.
